(19) Europäisches Patentamt
European Patent Office
Office européen des brevets

(11) **EP 2 378 153 B1**

(12) **EUROPEAN PATENT SPECIFICATION**

(45) Date of publication and mention
of the grant of the patent:
**10.06.2015 Bulletin 2015/24**

(51) Int Cl.:
***F16D 65/12*** *(2006.01)*     ***F16D 65/847*** *(2006.01)*

(21) Application number: **10160307.4**

(22) Date of filing: **19.04.2010**

(54) **Internally ventilated brake disk rotor**

Innenbelüfteter Bremsscheibenrotor

Récipient d'approvisionnement en révélateur

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**19.10.2011 Bulletin 2011/42**

(73) Proprietor: **Brembo SGL Carbon Ceramic Brakes
GmbH
86405 Meitingen (DE)**

(72) Inventor: **Pipilis, Andreas
86153 Augsburg (DE)**

(56) References cited:
**EP-A1- 0 717 214        WO-A1-2007/010569
DE-A1-102007 048 442**

EP 2 378 153 B1

## Description

The invention relates to an internally ventilated brake disk rotor having the form of a cylindrical slab of annular geometry and having an axis of circular symmetry for its outer circumference and its inner circumference, with a centre hole which is symmetric with regard to the said axis, comprising at least two disks which are aligned parallel to each other, and are connected with each other by a repeating series of ribs.

Internally ventilated brake disks have been known, i. a. from DE 22 57 176 A1, and from US patent 7,100,748 B2. These latter have two ring disks, or friction rings, which are connected to each other by means of webs, and ducts formed between the webs or ribs which ducts conduct cooling air. The ribs extend in a curved manner between their end regions, those at the outer circumference being radially aligned with respect to the brake disk, and the end regions neighbouring the inner circumference being set in a angle of from 20° to 70° with respect to a tangent with respect to a circle touching the innermost point of the said rib or web. The opening of the duct defined thereby points against the direction of rotation of the brake disk.

Although this design of cooling channels and ribs leads to improved heat removal compared to DE 22 57 176 A1, it was still desired to find a further improvement. It has also been found that the air flow inside the ducts can still be improved by generating more turbulence which turbulence improves the heat transport from the walls of the ducts formed by the ribs to the air flowing inside the ducts.

It is therefore an object of the invention to provide an internally ventilated brake disk rotor having the form of a cylindrical slab having annular geometry and having an axis of circular symmetry for its outer circumference and its inner circumference, with a centre hole which is symmetric with regard to the said axis, comprising at least two parallel ring disks which are connected with each other by a repeating series of ribs, with improved heat transport. This object has been achieved by internally vented brake disk rotors having the form of a cylindrical slab having annular geometry and having an axis of circular symmetry for its outer circumference and its inner circumference, with a centre hole which is symmetric with regard to the said axis, comprising at least two parallel ring disks which are connected with each other by a repeating series of ribs having a series of at least two major ribs $F_{11}$, $F_{21}$, ... $F_{m1}$ where m is a natural number of at least 2, the at least two parallel ring disks and the ribs together forming the brake disk rotor, where the following conditions are fulfilled:

(a) between each pair of these major ribs, there are at least three further ribs referred to as minor ribs or secondary ribs $F_{mn}$, where n is a natural number from 2 to 10, i. e., a rib that is not a major rib in which case n = 1, wherein there is at least one minor rib between each pair of consecutive major ribs which is longer than both neighbouring ribs, and at least one minor rib which is shorter than both neighbouring ribs,

(b) ducts are confined between the ribs, which ducts have orifices towards the outer circumference of the brake disks, characterised in that there is a distribution of the orifices of the ducts at the outer circumference of the brake disks such that the cross section area of at least one duct is always larger than each of the cross sections of the two neighbouring ducts, and that the cross section of at least one other duct is always smaller than each of the cross sections of the two neighbouring ducts, wherein the cross section of a duct is determined as the area in the cylinder jacket cut out by the said duct, the axis of which cylinder jacket is identical to the axis of rotation of the brake disk, and which cylinder jacket has the same radius as the outer end of said duct,

(c) the inner part of the major ribs $F_{m1}$ close to the rotation axis has the shape of a cudgel wherein the thickness of a major rib $F_{m1}$ has at least one minimum which is in the inner half of its radial extension, thickness being defined as the shortest path between one point on the contour of a rib, and any point on the opposite part of the rib, the contour being as formed by a plane intersecting the ribs in their middle height, being the extension parallel to the axis of the brake disk ring, which plane is parallel to the friction surfaces of the brake disk ring, or vertical to the axis of the brake disk ring,

(d) the part of the outline of a major rib $F_{m1}$ which lies within a zone delimited by the inner circumference $C_{l1}$ with the radius $R(C_{i1})$, and a second circumference $C'_{l1}$ having the radius $R(C'_{l1}) = R(C_{l1}) \times 1.1$, has at least two, preferably at least three, different radii R1 and R2 (and R3), the length of at least one of these radii selected from R1, R2, and R3, is at least 12 % of the radius $R(C_{l1})$, and preferably lies in the interval of from 14 % to 60 % of the radius $R(C_{l1})$,

(e) the outer contour of at least one rib $F_{mn}$ has a reversal point WP which lies in the direction towards the outer circumference of the said rib $F_{mn}$ from the inner section of this rib $F_{mn}$ on the flank of the neighbouring rib opposite to the direction of rotation, and the radius $R_v WP$ of curvature on this flank before this reversal point, i.e. in the direction of the axis of rotation, is larger than the radius $R_n WP$ of curvature after the reversal point. i. e. in the direction of the outer circumference, and

(f) the outer contour of at least one rib $F_{mn}$ has a reversal point WP which lies in the direction towards the outer circumference of the said rib $F_{mn}$ from the inner section of this said rib $F_{mn}$ on the flank of this said rib $F_{mn}$ opposite to the direction of rotation, and the position of this reversal point WP is defined by an angle $\alpha$ between the radius RWP through the reversal point WP on the flank of this said rib $F_{mn}$ opposite to the direction of rotation of the brake disk ring, and a straight line connecting this reversal point WP with the centre point PC of a circle circumscribed within the inner end of the rib immediately neighbouring this said rib $F_{mn}$ opposite to the direction of rotation, and this angle $\alpha$ is less than 90°.

As a preferred embodiment of the present invention the following condition is additionally fulfilled:

(g) at least one of the ribs $F_{mn}$ is formed of at least two parts, the inner part extending between circumferences $C_{mn}^1$ and $C_{mn}^2$, and the outer part extending between circumferences $C_{mn}^3$ and $C_o$.

The symbols used here are explained in the figures and the legend thereto, for specific values of m and n.

The ribs of the brake disk are formed in a way to divide a flow of a fluid, particularly air or liquid, and to guide the flow along a predetermined way so that it will detach from one wall of a duct formed by the space between two ribs, and hit a further rib where it will again be divided.

The irregularities caused by an alternating sequence of longer and shorter ribs, rather than a staggered arrangement of consecutive ribs with decreasing radial extension provide the needed distribution of the flow so that the overall heat transfer from the brake disk to the fluid is increased. Additionally, this alternating sequence of longer and shorter ribs leads to a more homogeneous distribution of heat fluxes.

The internally vented brake disks of the invention therefore have a series of at least two major ribs which extend over a radial distance of at least 85 %, and more preferably, at least 90 %, of the ring zone between the inner circumference and the outer circumference of a brake disk, and between each pair of these major ribs, there are at least three further ribs referred to as minor ribs, wherein there is at least one minor rib between each pair of consecutive major ribs which is longer than both neighbouring ribs, and at least one minor rib which is shorter than both neighbouring ribs. A rib is said to be shorter than an other if the two concentric circles having the axis of the brake disk as their centres touching the inner and the outer ends of the said shorter rib have a smaller difference of radii than the two circles touching the inner and outer ends of the said longer rib. In a particularly preferred embodiment, the number of minor ribs between each two major ribs is an odd number.

In a further preferred embodiment, heat has been found to be more effectively transferred from the walls of the duct to the air flowing therein if there is a distribution of the orifices of the ducts at the outer circumference of the brake disk such that the cross section area of one duct is always larger than each the cross sections of the two neighbouring ducts, and similarly, the cross section of an other duct is always smaller than each of the cross sections of the two neighbouring ducts. The cross section is determined as the area in the cylinder jacket of the outer, or peripheral, end of the ducts.

It is further preferred that the cross section of the duct which lies in the direction of rotation directly after a major rib is smaller than that cross section of the duct which lies directly against the direction of rotation with respect to the same major rib. In a particularly preferred embodiment, the ratio of cross sectional areas of these two neighbouring ducts is at least 1.1, preferably at last 1.2. The ratio is determined in each case by diving the larger value by the smaller value.

In a preferred embodiment, the internally ventilated brake disk rotor has the form of a cylindrical slab having annular geometry and having an axis of circular symmetry for its outer circumference and its inner circumference, with a centre hole which is symmetric with regard to the said axis, and comprising at least two ring disks which are connected with each other by a repeating series of ribs, and has such a series of ribs $F_{mn}$ between one flat side of each of these disks, which ribs $F_{mn}$ extend from the inner circumference or from any point between the inner circumference and the outer circumference to another point the distance of which from the axis of the brake disk rotor is from 40 % to 100 % of the radius of the outer circumference of the brake disk rotor.

When referring to these ribs, the index m denotes an integer number from 1 to i, where i can have a selected value from i = 2 to i = 64, and n denotes an integer number from 1 to j, where j can have a selected value from j = 4 to j = 10, and wherein each of the ribs $F_{mn}$ for all m from 1 to i and for each individual constant value of n are of the same shape, and wherein the sequence in circular direction being a i-fold repetition of a set of ribs with equal number j of ribs that obey the following rule:

- for a given m, the radial extension $R_{m1}$ of the rib $F_{m1}$, measured as the radial distance from the end of the rib $F_{m1}$ closest to the axis of symmetry to the end of the rib $F_{m1}$ which is farthest away from the axis of symmetry, is the longest in the series of $F_{m1}$, $F_{m2}$, $F_{m3}$, ..., $F_{mj}$,

- for a given m, the radial extension $R_{m,n+1}$ of the rib $F_{m,n+1}$, measured as the radial distance from the end of the rib $F_{m,n+1}$ closest to the axis to the end of the rib $F_{m,n+1}$ which is farthest away from the axis, is shorter than the radial extension of rib $F_{m1}$, but longer than the radial extension of rib $F_{mn}$ and longer than the radial extension of rib $F_{i,n+2}$ if n+1 is an odd number from 3 to j-1,

- for a given m, the radial extension $R_{m,n+1}$ of the rib $F_{m,n+1}$, measured as the radial distance from the end of the rib $F_{m,n+1}$ closest to the axis to the end of the rib $F_{m,n+1}$ which is farthest away from the axis, is shorter than the radial extension of rib $F_{m1}$, and shorter than the radial extension of rib $F_{mn}$ and shorter than the radial extension of rib $F_{m,n+2}$ if n+1 is an even number from 2 to j-2.

In this nomenclature, ribs $F_{m1}$ are the major ribs, and all ribs $F_{mn}$ where n is not equal to 1 are referred to as minor ribs in this application. For improved readability, a comma has been inserted within the indices if an expression such as "n+1" is written.

In a further preferred embodiment, the internally ventilated brake disk rotor may have ribs $F_{mn}$ which are divided into at least two parts $F'_{mn}$ and $F''_{mn}$ along their radial extension, with the condition that the radial extension of $F'_{mn}$ is from 10 % to 80 % of the radial extension of $F_{mn}$, and that the radial extension of $F''_{mn}$ is from 80 % to 10 % of the radial extension of $F_{mn}$, with the sum of radial extensions of ribs $F'_{mn}$ and $F''_{mn}$ being no more than 90 % of the radial extension of $F_{mn}$. In other words, a portion of at least 10 % of the radial extension of the said rib has been removed. It is preferred in this case to have only ribs where n is not equal to 1 (i. e. only the minor ribs) to be divided into at least two parts. It is further preferred to have only ribs $F_{mn}$ where n is an odd number, and not equal to 1, to be divided into at least two parts. It is preferred to divide these ribs into two parts.

In a still further preferred embodiment, the internally ventilated brake disk rotor has a plurality of ribs where the distances in a series of ribs alternate in a way that the distance between a pair of neighbouring ribs (b) and (c) arbitrarily picked is always either smaller than both the distance between rib (b) and its predecessor (a) and the distance between rib (c) and its successor (d), or larger than both the distance between rib (b) and its predecessor (a) and the distance between rib (c) and its successor (d), which distances are defined as the path between two adjacent ribs connecting the said two adjacent ribs along the surface of a cylinder jacket touching the ends of the said ribs closest to the outer circumference in a plane perpendicular to the axis of rotation of the brake disk rotor which cuts the said ribs in half-height, predecessor meaning the rib immediately preceding a rib with regard to the direction of rotation, and successor meaning the rib immediately preceding a rib with regard to the direction of rotation.

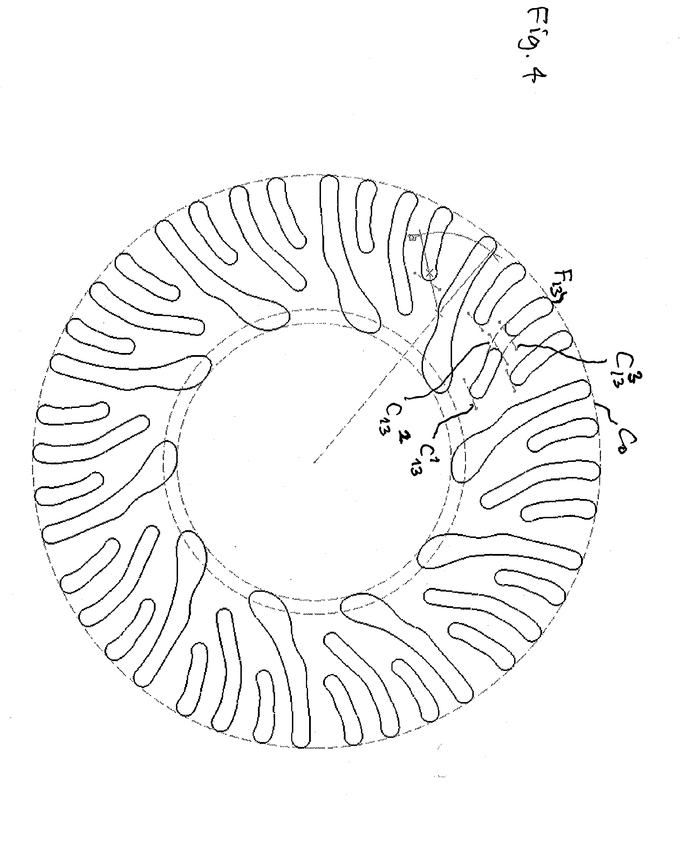

The circumferential outer end of a rib is the intersection, or common point, of the outer circumscribed circle of all ribs in the brake disk ring, and the said rib. Analogously, the circumferential inner end of a rib $F_{mn}$ is the intersection, or common point, of the inner circumscribed circle of all ribs having the same value of n in the brake disk ring, and the said rib. The radial extension of a rib is then the difference in radii between its inner and outer circumferences. Particularly, the radial extension of a rib $F_{m1}$ is the difference between the radii of the outer circumference Co and the inner circumference $C_{i1}$. Analogously, the radial extension of a rib $F_{m2}$ is the difference between the radii of the outer circumference $C_o$ and the inner circumference $C_{i2}$, the radial extension of a rib $F_{m3}$ is the difference between the radii of the outer circumference Co and the inner circumference $C_{i3}$, and the radial extension of a rib $F_{m4}$ is the difference between the radii of the outer circumference Co and the inner circumference $C_{i4}$. While it is preferred that all ribs have the same outer circumference $C_o$, it is of course also possible within the scope of this invention to let the ribs end at different outer circumferences. This is of course the case for the embodiment as shown in Fig. 4 infra.

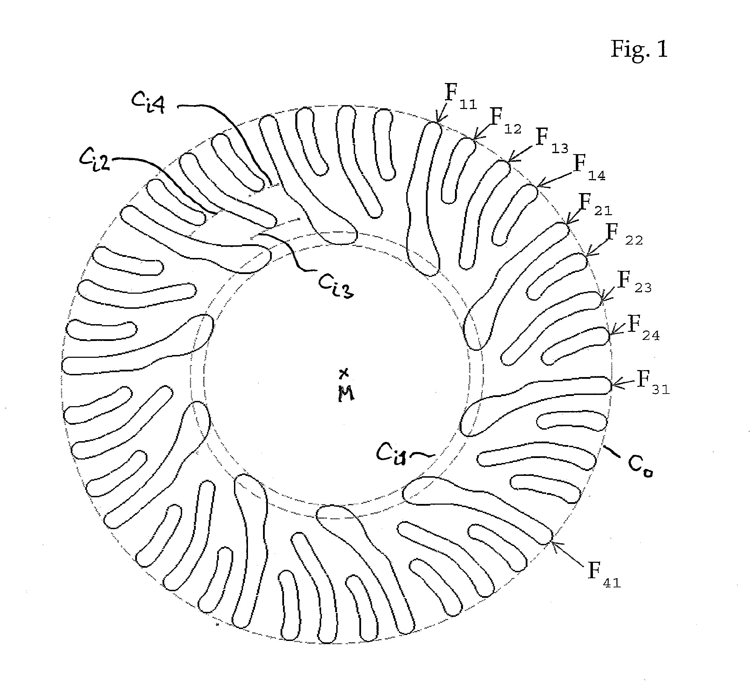

The invention is further explained with the figures 1 to 6.

These figures show:

in Fig. 1, a view is shown onto a section through the ribs F of a brake disk ring perpendicular to the axis of rotation, with a clockwise sense of rotation of the brake disk ring as looked on from above the plane of the paper when the car is in forward direction. The major ribs are here denoted by $F_{11}$, $F_{21}$, $F_{31}$, $F_{41}$, etc., with a total of 10 major ribs denoted by the secondary index "1", $F_{m1}$ (i = 10) in this case, and a plurality of series of ribs $F_{11}$, $F_{12}$, $F_{13}$, $F_{14}$; $F_{21}$, $F_{22}$, $F_{23}$, $F_{24}$; etc. where there are additionally to the said major ribs $F_{m1}$ three minor ribs $F_{m2}$, $F_{m3}$, and $F_{m4}$ (j = 4) with secondary indices "2", "3", and "4", in each of series shown here. Ten series of ribs are shown, where all ribs having the same secondary index (from 1 to 4) are each rotationally symmetric with respect to the other ribs having the same secondary index. The point "M" is the intersection of the axis of rotation with the plane of the paper, equivalent to the plane of the section. Inner and outer circles are shown as broken lines which are the outer circumference Co and the inner circumference $C_{i1}$ which denotes the innermost end of the primary ribs $F_{m1}$. Further circumference segments $C_{i2}$, $C_{i3}$ and $C_{i4}$ denote the inner circumferences that limits the innermost ends of the further secondary, tertiary and quaternary ribs $F_{m2}$, $F_{m3}$, and $F_{m4}$.

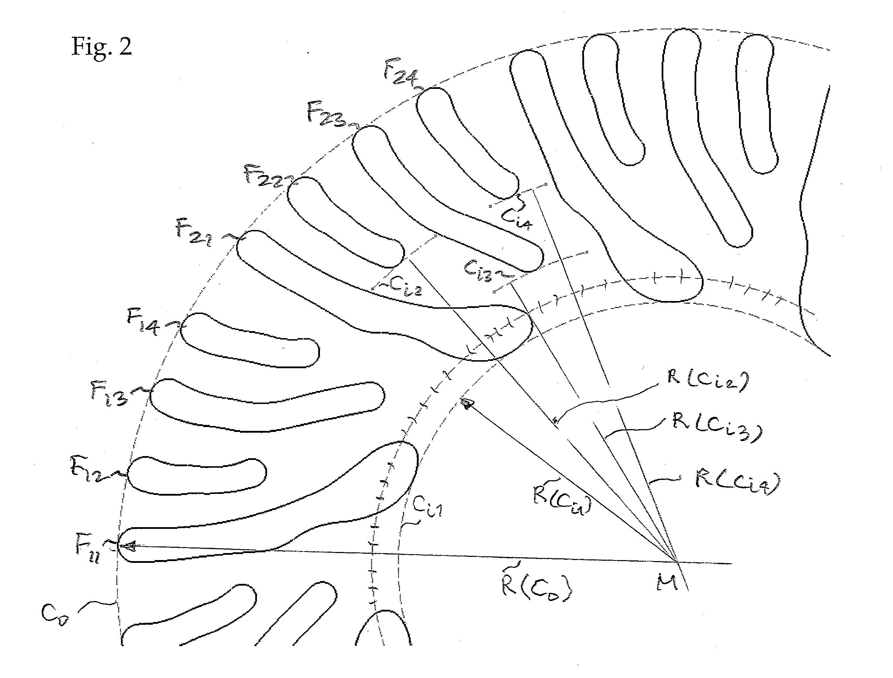

In Fig. 2, a detail of Fig. 1 is shown where the radial extensions are shown for the individual ribs by sections of the

inner circumferences $C_{i1}$, $C_{i2}$, $C_{i3}$, and $C_{i4}$ together with the outer circumference Co which limit the ribs as explained supra, so the radial extension of $F_{11}$ is $R(C_o)$ - $R(C_{i1})$, that of $F_{12}$ is $R(C_o)$ - $R(C_{i2})$, etc. where $R(C_o)$ is the radius of the outer circumference $C_o$, $R(C_{i1})$ is the radius of the inner circumference $C_{i1}$, etc.

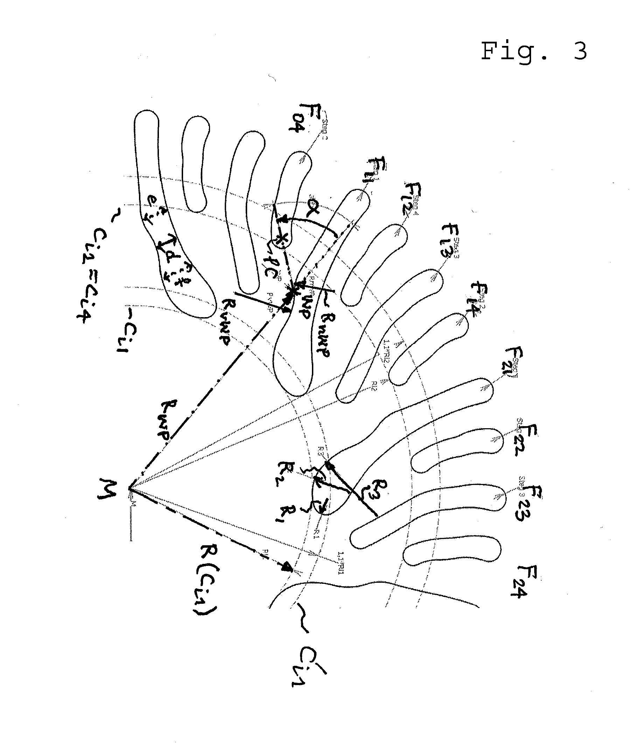

In Fig. 3, a preferred geometry is shown in a view on a section through the ribs of a brake disk ring, where the inner part of ribs $F_{m1}$ has the shape of a cudgel. This preferred geometry can best be described by the condition that the thickness of a major rib $F_{m1}$ has at least one minimum which is in the inner half of its radial extension, thickness being defined as the shortest path between one point on the contour of a rib as shown in figures 1 and 2, and any point on the opposite part of the rib, the contour being as formed by a plane intersecting the ribs in their middle height, being the extension parallel to the axis of the brake disk ring, which plane is parallel to the friction surfaces of the brake disk ring, or vertical to the axis of the brake disk ring.

In the case shown in this Fig. 3, which depicts a further preferred embodiment, the part of the outline of rib $F_{m1}$ which lies within a zone delimited by the inner circumference $C_{i1}$ with the radius $R(C_{i1})$, and a second circumference $C'_{i1}$ having the radius $R(C'_{i1}) = R(C_{i1}) \times 1.1$, has three different radii R1, R2 and R3 which lie in the interval of from 5 % to 60 % of the radius $R(C_{i1})$; and in this case as shown in Fig. 3, R2 and R3 lie in the preferred range of from 12 % to 45 % of the radius $R(C_{i1})$.

A further important preferred characteristic is also shown in this Fig. 3, viz., a reversal point WP which lies in the direction towards the outer circumference of a major rib $F_{21}$ from the inner section of this major rib on the flank of the rib opposite to the direction of rotation. The radius $R_vWP$ of curvature on this flank before this reversal point, i. e. in the direction of the axis of rotation, is larger than the radius $R_nWP$ of curvature after the reversal point, i. e. in the direction of the outer circumference. In a further preferred embodiment of this cudgel form of the major rib, the position of this reversal point is defined by an angle $\alpha$ between the radius RWP through the reversal point WP on the flank of the major rib $F_{m1}$ opposite to the direction of rotation of the brake disk ring, and a straight line connecting this reversal point WP with the centre point PC of a circle circumscribed within the inner end of the rib immediately following this major rib opposite to the direction of rotation, in the case shown in the figure, $F_{04}$. The inner end of the said rib $F_{04}$ is the one nearer to the axis of rotation. This angle $\alpha$ is less than 90°, preferably between 80° and 30°, and particularly preferably, between 70° and 40°.

It has also led to improved heat transfer between the ventilated brake disk ring and the air or fluid guided through the vents or ducts or channels formed by the ribs if the ratio of the angle $\alpha$ as defined above and the angle $\beta$ between the radius $R_{WP}$ through the reversal point and the tangent to the outer contour of the major rib through the reversal point WP is less than 2.1 which results in a smoother redirection of the air or liquid flow. Particularly good results have been found if this ratio is less than 1.8, and still better results if this ratio is between 0.9 and 1.7.

In Fig. 4, a further preferred geometry is shown in a view on a section in a plane perpendicular to the axis of rotation through the ribs of a brake disk ring, which comprises a rib $F_{13}$ that is formed of two parts, the inner part extending between circumferences $C_{13}^1$ and $C_{13}^2$, and the outer part extending between circumferences $C_{13}^3$ and $C_o$. This interruption creates additional turbulence at the inner section of the outer part of rib $F_{13}$, thus leading to further improved heat exchange.

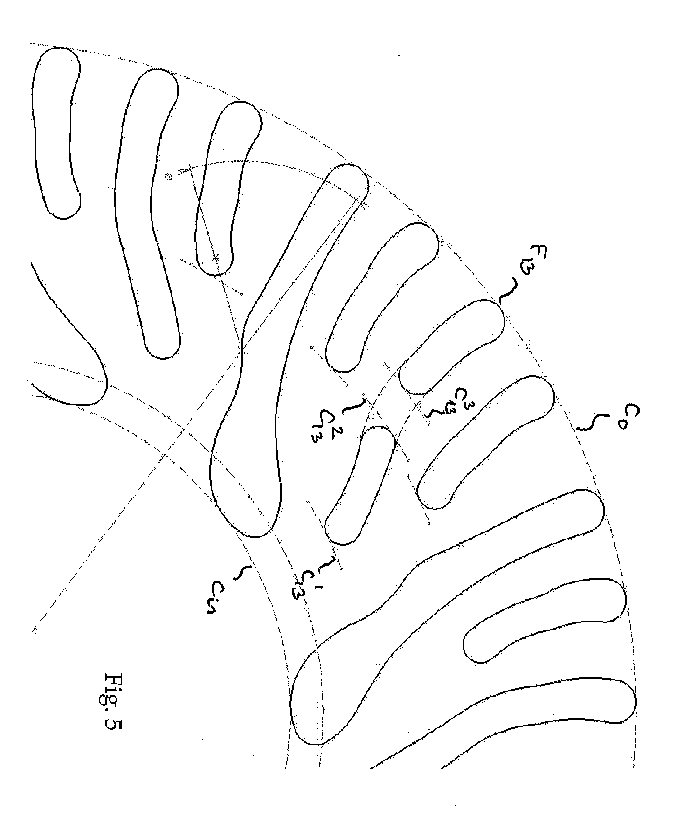

In Fig. 5 which is an enlarged section of fig. 4, the angle $\alpha$ and circumferences defining the interrupted rib $F_{13}$ are shown in greater detail.

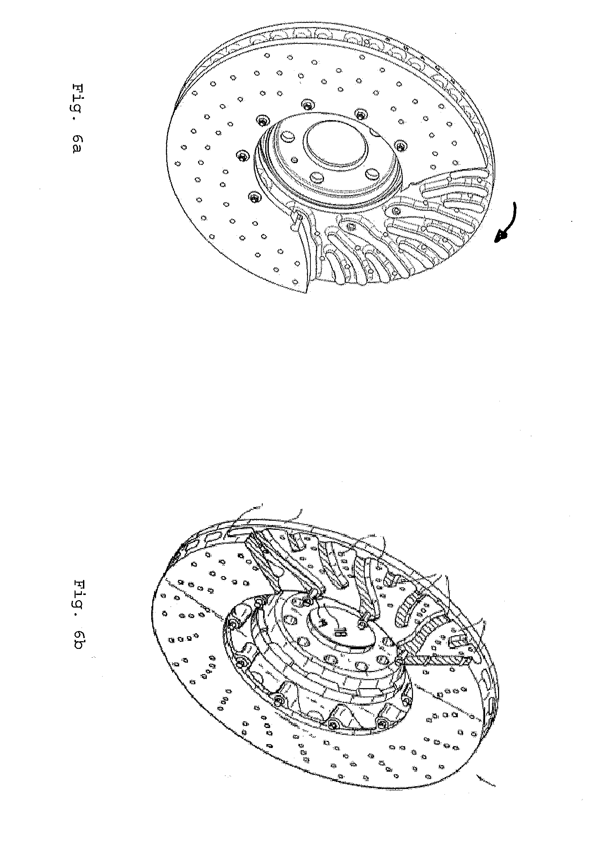

In Fig. 6, a comparison is shown of a geometry according to the invention (Fig. 6a) to a geometry according to US 7,100,748 (Fig. 6b), with one major and three minor ribs in Fig. 6a, and one major and two minor ribs in Fig. 6b. The distinguishing features of the present invention are clearly visible which include the alternating width of the ducts or vents enclosed between any two ribs at the outer circumference, the form of the ribs according to the invention, and as shown in Fig. 6a, having always a positive radius of curvature with respect to a point lying in the direction of rotation seen from any of the ribs, while the geometry of Fig. 6b has a negative radius of curvature in the centre portion of the major ribs, and a positive radius of curvature in the portion of the major ribs close to the outer circumference.

The air or liquid flow is guided particularly well, i. e. without zones of slow velocity and calm, and very uniformly over the whole open area of the ducts which are formed by the ribs, if the radial extension of the ribs in the case of one major and three further ribs satisfy the following conditions, stated as normalised to the radial extension of the major rib set to 100%:

$$R_{m1} = 100 \% \times (R(C_o) - R(C_{i1}));$$

$$R_{m2} = (10 .. 50) \% \times R_{m1},$$

preferably $R_{m2} = (15 .. 45) \% \times R_{m1}$,
particularly preferably $R_{m2} = (20 .. 40) \% \times R_{m1}$;

$$R_{m3} = (50 .. 90) \% \times R_{m1},$$

preferably $R_{m3} = (55 .. 85) \% \times R_{m1}$,
particularly preferably $R_{m3} = (60 .. 80) \% \times R_{m1}$;

$$R_{m4} = (10 .. 50) \% \times R_{m1},$$

preferably $R_{m4} = (15 .. 45) \% \times R_{m1}$,
particularly preferably $R_{m4} = (20 .. 40) \% \times R_{m1}$.

The notation "(10 .. 50) % $\times R_{m1}$" stands for "from 10 % of to 50 % of $R_{m1}$" etc.

A further preferred embodiment as shown in Fig. 6a according to the present invention is that the brake disk has a plane of symmetry perpendicular to its axis of rotation. This has the advantage that the brake disk can be used either on the left hand wheels of a car, or on the right hand wheels of a car, where it is only needed to fasten the bell on the one side, or on the other side, of the brake disk ring. As can be seen from Fig. 6b constituting a vented brake disk of the prior art, it has been customary to form the brake disk ring as a non-plane-symmetrical ring, which necessitates to have two forms which are mirror equivalents, if not all of the ribs are symmetric with respect to the radius that traverses it and cuts each plane of the rib into two identical halves.

It is understood, and has also been shown in the experiments leading to the present invention, that the presence of each of the preferred embodiments alone will already bring about an improved heat transfer from the brake disk body to the air or fluid flowing through the ducts formed by any two neighbouring ribs, and the inner surface of the bottom and cover cylinder rings that form the ventilated brake ring. Any combination of two or more of the preferred embodiments is particularly preferable and leads to still further improved heat transfer.

The following experiment is provided to show one preferred example, and to explain the increase in performance of a brake disk ring according to the present invention in comparison to the state of the art, particularly in the rate of heat transfer, and uniformity thereof over the area of the brake disk ring. Good uniformity of the heat transfer leads to homogeneous temperature distribution over the friction surface area of a brake disk, and thereby, also to a decrease in thermally induced tensions within the brake disk.

Example

Experiments have been made to distinguish between a design according to Fig. 2 of US patent 7,100,748 B2, and one according to this invention (Fig. 1). The design of the said US patent was modified to comprise also sets of four ribs each, so that there was almost no difference in the total area of heat exchange surfaces between the two brakes disks. In this context, "almost no difference" means a difference of less than 2 %. Fig. 6 shows a comparison of the geometries used (Fig. 6b is taken from US patent 7,100,748 B2, and does not exactly represent the geometry used for comparison). In both cases a brake disk having an outer diameter of 380 mm and in inner diameter of 199 mm was used.

In a road test with the same vehicle the cooling performance of both designs was compared. At the same initial surface temperature of 500 °C, with an outside air temperature of 11.5 °C for the design (comparative) according to Fig. 2 of the US patent 7,100,748 B2 and 13.5 °C for the design according to Fig. 1 of this invention, the brake disk was held at a constant revolution speed corresponding to a constant velocity of 120 km/h. The time was measured which was needed to cool down the brake disk to a surface temperature of 150 °C. Additionally the distribution of heat fluxes at the ribs was derived by use of Computational Fluid Dynamics Simulation.

The following results were obtained:

| Brake Disk Ring | according to Fig. 1 | according to US 7,100,748 B2 (4 ribs) |
| --- | --- | --- |
| time to cool | 213.5 s | 237 s |
| relative heat flux at rib 1 | 38.3 % | 35.8 % |
| relative heat flux at rib 2 | 17.2 % | 26.6 % |
| relative heat flux at rib 3 | 26.0% | 23.0 % |
| relative heat flux at rib 4 | 18.5 % | 14.6 % |

(continued)

| Brake Disk Ring | according to Fig. 1 | according to US 7,100,748 B2 (4 ribs) |
| --- | --- | --- |
| total convectional heat flux | 8909 W | 8304 W |

The relative proportion of heat flow has diminished steadily from the major or primary rib to the second, third and fourth (share in % : 35.8 to 26.6 to 23.0 to 14.6) in the case of a geometry according to US 7,100,748, which has led to non-uniform cooling over the friction surfaces of the brake disks tested, the sum of relative heat fluxes over the first and second rib being 62.4 %, while only 37.6 % of the heat was transferred over ribs three and four of one set. In the example with a geometry according to the invention, that of Fig. 1, the sum of relative heat flux over ribs 1 and 2 is 55.5 %, and the sum of relative heat fluxes over ribs 3 and 4 is 44.5 %. This distribution leads to a much more uniform cooling of the brake disk friction surfaces, which also diminishes differences in thermal expansion of the brake disk, and thus, also warping of the disk.

In both cases, the material of the brake disks was the same carbon-fibre reinforced silicon carbide ceramic. Similar results with faster cooling and a more even distribution of friction surface temperatures are obtained when using brake disks made of cast iron with the same geometries.

A further unexpected finding was that the brake disk according to this invention with alternating cross section size at the outer circumference shows less noise in braking, compared to a uniform size of the cross sections. Without desiring to be bound by this explanation, a reason may be that undulatory deformation of the outer rim of the brake disk is impeded by the irregular distribution of cross sections in a brake disk according to the invention.

## Claims

1. Internally vented brake disks having the form of a cylindrical slab having annular geometry and having an axis of circular symmetry for its outer circumference and its inner circumference and a plane of symmetry perpendicular to its axis of rotation, with a centre hole which is symmetric with regard to the said axis, comprising at least two parallel ring disks which are connected with each other by a repeating series of ribs having a series of at least two major ribs $F_{m1}$ where m is a natural number of at least 2, a major rib being defined as a rib which extends over a radial distance of at least 85 % of the ring zone between the inner circumference and the outer circumference of a brake disk, the at least two parallel ring disks and the ribs together forming the brake disk rotor, **characterised in that** the following conditions are fulfilled:

    (a) between each pair of these major ribs, there are at least three further ribs referred to as minor ribs or secondary ribs $F_{mn}$, where n is a natural number from 2 to 10, i. e., a rib that is not a major rib in which case n = 1, wherein there is at least one minor rib between each pair of consecutive major ribs which is longer than both neighbouring ribs, and at least one minor rib which is shorter than both neighbouring ribs,

    (b) ducts are confined between the ribs, which ducts have orifices towards the outer circumference of the brake disks, **characterised in that** there is a distribution of the orifices of the ducts at the outer circumference of the brake disks such that the cross section area of at least one duct is always larger than each of the cross sections of the two neighbouring ducts, and that the cross section of at least one other duct is always smaller than each of the cross sections of the two neighbouring ducts, wherein the cross section of a duct is determined as the area in the cylinder jacket cut out by the said duct, the axis of which cylinder jacket is identical to the axis of rotation of the brake disk, and which cylinder jacket has the same radius as the outer end of said duct,

    (c) the inner part of the major ribs $F_{m1}$ close to the rotation axis has the shape of a cudgel wherein the thickness of a major rib $F_{m1}$ has at least one minimum which is in the inner half of its radial extension, thickness being defined as the shortest path between one point on the contour of a rib, and any point on the opposite part of the rib, the contour being as formed by a plane intersecting the ribs in their middle height, being the extension parallel to the axis of the brake disk ring, which plane is parallel to the friction surfaces of the brake disk ring, or vertical to the axis of the brake disk ring,

    (d) the part of the outline of a major rib $F_{m1}$ which lies within a zone delimited by the inner circumference $C_{i1}$ with the radius $R(C_{i1})$, and a second circumference $C'_{i1}$ having the radius $R(C'_{i1}) = R(C_{i1}) \times 1.1$, has at least two different radii, the length of at least one of these radii is at least 12 % of the radius $R(C_{i1})$,

    (e) the outer contour of at least one rib $F_{mn}$ has a reversal point WP which lies in the direction towards the outer circumference of the said rib $F_{mn}$ from the inner section of this rib $F_{mn}$ on the flank of the neighbouring rib opposite to the direction of rotation, and that the radius $R_v WP$ of curvature on this flank before this reversal point, i. e. in the direction of the axis of rotation, is larger than the radius $R_n WP$ of curvature after the reversal point. i. e. in the direction of the outer circumference, and

(f) the outer contour of at least one rib $F_{mn}$ has a reversal point WP which lies in the direction towards the outer circumference of the said rib $F_{mn}$ from the inner section of this said rib $F_{mn}$ on the flank of this said rib $F_{mn}$ opposite to the direction of rotation, and the position of this reversal point WP is defined by an angle $\alpha$ between the radius RWP through the reversal point WP on the flank of this said rib $F_{mn}$ opposite to the direction of rotation of the brake disk ring, and a straight line connecting this reversal point WP with the centre point PC of a circle circumscribed within the inner end of the rib immediately neighbouring this said rib $F_{mn}$ opposite to the direction of rotation, and this angle $\alpha$ is less than 90°.

2. The internally ventilated brake disks of claim 1 **characterised in that** the major ribs extend over a radial distance of at least 90 % of the ring zone between the inner circumference and the outer circumference of a brake disk.

3. The internally ventilated brake disks of any of the preceding claims **characterised in that** there is at least one minor rib between any two major ribs $F_{m-1,\,1}$ and $F_{m1}$, the number of minor ribs between each two major ribs being an odd number.

4. The internally ventilated brake disks of any preceding claim **characterised in that** the cross section of the duct which lies in the direction of rotation with respect to a major rib, is larger than that cross section of the duct which lies against the direction of rotation with respect to a major rib.

5. The internally ventilated brake disks of claim 4 **characterised in that** the ratio of cross sectional areas of these two neighbouring ducts is at least 1.1.

6. The internally ventilated brake disks of any preceding claim **characterised in that** the internally ventilated brake disk rotor has such a series of ribs $F_{mn}$ between one flat side of each of these disks, which ribs $F_{mn}$ extend from the inner circumference or from any point between the inner circumference and the outer circumference to another point the distance of which from the axis of the brake disk rotor is from 40 % to 100 % of the radius of the outer circumference of the brake disk rotor.

7. The internally ventilated brake disks of claim 6 **characterised in that** the index m in the ribs $F_{mn}$ denotes an integer number from 1 to i, where i can have a selected value from i = 2 to i = 64, and n denotes an integer number from 1 to j, where j can have a selected value from j = 4 to j = 10, and wherein each of the ribs $F_{mn}$ for all m from 1 to i and for each individual constant value of n are of the same shape, and wherein the sequence in circular direction being a i-fold repetition of a set of ribs with equal number j of ribs that obey the following rule:

- for a given m, the radial extension $R_{m1}$ of the rib $F_{m1}$, measured as the radial distance from the end of the rib $F_{m1}$ closest to the axis of symmetry to the end of the rib $F_{m1}$ which is farthest away from the axis of symmetry, is the longest in the series of $F_{m1}$, $F_{m2}$, $F_{m3}$, ..., $F_{mj}$,
- for a given m, the radial extension $R_{m,n+1}$ of the rib $F_{m,n+1}$, measured as the radial distance from the end of the rib $F_{m,n+1}$ closest to the axis to the end of the rib $F_{m,n+1}$ which is farthest away from the axis, is shorter than the radial extension of rib $F_{m1}$, but longer than the radial extension of rib $F_{mn}$ and longer than the radial extension of rib $F_{i,n+2}$ if n+1 is an odd number from 3 to j-1,
- for a given m, the radial extension $R_{m,n+1}$ of the rib $F_{m,n+1}$, measured as the radial distance from the end of the rib $F_{m,n+1}$ closest to the axis to the end of the rib $F_{m,n+1}$ which is farthest away from the axis, is shorter than the radial extension of rib $F_{m1}$, and shorter than the radial extension of rib $F_{mn}$ and shorter than the radial extension of rib $F_{m,n+2}$ if n+1 is an even number from 2 to j-2.

8. The internally ventilated brake disks of claim 6 **characterised in that** the internally ventilated brake disk rotor may have ribs $F_{mn}$ which are divided into two parts $F'_{mn}$ and $F''_{mn}$ along their radial extension, with the condition that the radial extension of $F'_{mn}$ is from 10 % to 80 % of the radial extension of $F_{mn}$, and that the radial extension of $F''_{mn}$ is from 80 % to 10 % of the radial extension of $F_{mn}$, with the sum of radial extensions of ribs $F'_{mn}$ and $F''_{mn}$ being no more than 90 % of the radial extension of $F_{mn}$.

9. The internally ventilated brake disks of claim 6 **characterised in that** the internally ventilated brake disk rotor has a plurality of ribs wherein the distances in a series of ribs alternate in a way that the distance between a pair of neighbouring ribs (b) and (c) arbitrarily picked is always either smaller than both the distance between rib (b) and its predecessor (a) and the distance between rib (c) and its successor (d), or larger than both the distance between rib (b) and its predecessor (a) and the distance between rib (c) and its successor (d), which distances are defined as the path between two adjacent ribs connecting the said two adjacent ribs along the surface of a cylinder jacket touching the ends of the said ribs closest to the outer circumference in a plane perpendicular to the axis of rotation of the brake disk rotor which cuts the said ribs in half-height, predecessor meaning the rib immediately preceding a rib with regard to the direction of rotation, and successor meaning the rib immediately following a rib with regard to the direction of rotation.

10. The internally ventilated brake disks of claim 6 wherein the distance between a major rib $F_{m1}$ and the rib immediately next to it in the direction opposite to the direction of rotation is the largest in the set of distances between ribs in a series of rib $F_{m1}$ and all further ribs with the same value of m.

11. The internally ventilated brake disks of any preceding claim **characterised in that** the ratio between the angle $\alpha$ and an angle $\beta$ between the radius $R_{WP}$ through the reversal point and the tangent to the outer contour of the major rib through the reversal point WP is less than 2.1.

12. The internally ventilated brake disks of any preceding claim **characterised in that** the length of at least one radius between $R(C_{i1})$ and $R(C'_{i1}) = R(C_{i1}) \times 1.1$ lies in the interval of from 14 % to 60 % of the radius $R(C_{i1})$.

## Patentansprüche

1. Innenbelüftete Bremsscheiben in Form einer zylindrischen Platte mit ringförmiger Geometrie, die eine Kreissymmetrieachse für ihren Außenumfang und Ihren Innenumfang sowie eine zu ihrer Drehachse senkrechte Symmetrieebene aufweist, mit einem bezogen auf die Achse symmetrischen mittigen Loch, umfassend: wenigstens zwei parallele Ringscheiben, die durch eine sich wiederholende Reihe von Rippen mit einer Reihe von wenigstens zwei Hauptrippen $F_{m1}$ miteinander verbunden sind, wobei m eine natürliche Zahl von wenigstens 2 ist, wobei eine Hauptrippe als eine Rippe definiert ist, die sich über eine radiale Strecke von wenigstens 85 % des Ringbereichs zwischen dem Innenumfang und dem Außenumfang einer Bremsscheibe erstreckt, wobei die wenigstens zwei parallelen Ringscheiben und die Rippen zusammen den Bremsscheibenrotor ausbilden, **dadurch gekennzeichnet, dass** folgende Bedingungen erfüllt sind:

(a) zwischen jedem Paar dieser Hauptrippen sind wenigstens drei, als Neben- oder Sekundärrippen $F_{mn}$ bezeichnete weitere Rippen vorgesehen, wobei n eine natürliche Zahl von 2 bis 10 ist, d. h. eine Rippe, die keine Hauptrippe mit n = 1 ist, wobei zwischen jedem Paar aufeinander folgender Hauptrippen wenigstens eine Nebenrippe, die länger ist als beide benachbarten Rippen, und wenigstens eine Nebenrippe, die kürzer ist als beide benachbarten Rippen, vorgesehen ist,

(b) zwischen den Rippen sind Kanäle eingeschlossen, wobei die Kanäle zum Außenumfang der Bremsscheiben hin Öffnungen aufweisen, **dadurch gekennzeichnet, dass** die Öffnungen der Kanäle am Außenumfang der Bremsscheiben derart verteilt sind, dass die Querschnittsfläche wenigstens eines Kanals stets größer ist als jeder der Querschnitte der zwei benachbarten Kanäle und dass der Querschnitt wenigstens eines weiteren Kanals stets kleiner ist als jeder der Querschnitte der zwei benachbarten Kanäle, wobei als Querschnitt eines Kanals die durch den Kanal im Zylindermantel ausgeschnittene Fläche zu verstehen ist, wobei die Achse des Zylindermantels der Drehachse der Bremsscheibe entspricht und der Zylindermantel den gleichen Radius aufweist wie das äußere Ende des Kanals,

(c) der innere Teil der Hauptrippen $F_{m1}$ nahe der Drehachse weist die Form eines Knüppels auf, wobei die Dicke einer Hauptrippe $F_{m1}$ wenigstens ein in der inneren Hälfte ihrer radialen Erstreckung befindliches Minimum aufweist, wobei Dicke als der kürzeste Weg zwischen einem Punkt auf der Kontur einer Rippe und einem Punkt auf dem gegenüberliegenden Teil der Rippe definiert ist, wobei die Kontur so ist, wie sie durch eine Ebene ausgebildet wird, welche die Rippen in ihrer mittleren Höhe, bei der es sich um die Erstreckung parallel zur Achse des Bremsscheibenrings handelt, schneidet, wobei die Ebene parallel zu den Reibungsflächen des Bremsscheibenrings bzw. vertikal zur Achse des Bremsscheibenrings verläuft,

(d) der Teil des Umrisses einer Hauptrippe $F_{m1}$, der innerhalb eines durch den Innenumfang $C_{i1}$ mit dem Radius $R(C_{I1})$ und einen zweiten Umfang $C'_{i1}$ mit dem Radius $R(C'_{I1}) == R(C_{i1})$ x 1,1 begrenzten Bereichs liegt, weist wenigstens zwei verschiedene Radien auf, wobei die Länge wenigstens eines dieser Radien wenigstens 12 % des Radius $R(C_{i1})$ beträgt,

(e) die Außenkontur wenigstens einer Rippe $F_{mn}$ weist einen Wendepunkt WP auf, der in der Richtung hin zum Außenumfang der Rippe $F_{mn}$ ausgehend vom inneren Abschnitt dieser Rippe $F_{mn}$ auf der Flanke der entgegengesetzt zur Drehrichtung benach-barten Rippe liegt, und der Krümmungsradius $R_v WP$ auf dieser Flanke vor diesem Wendepunkt, d. h. in der Richtung der Drehachse, ist größer als der Krümmungsradius $R_n WP$ nach

dem Wendepunkt, d. h. in der Richtung des Außenumfangs, und

(f) die Außenkontur wenigstens einer Rippe $F_{mn}$ weist einen Wendepunkt WP auf, der in der Richtung hin zum Außenumfang der Rippe $F_{mn}$ ausgehend vom inneren Abschnitt dieser Rippe $F_{mn}$ auf der zur Drehrichtung entgegengesetzten Flanke dieser Rippe $F_{mn}$ liegt, und die Position dieses Wendepunkts WP ist definiert durch einen Winkel $\alpha$ zwischen dem Radius RWP durch den Wendepunkt WP auf der zur Drehrichtung des Bremsscheibenrings entgegengesetzten Flanke dieser Rippe $F_{mn}$ und einer geraden Linie, die diesen Wendepunkt WP mit dem Mittelpunkt PC eines Kreises verbindet, der innerhalb des inneren Endes der dieser Rippe $F_{mn}$ entgegengesetzt zur Drehrichtung unmittelbar benachbarten Rippe umschrieben ist, und dieser Winkel $\alpha$ ist kleiner als 90°.

2. Innenbelüftete Bremsscheiben nach Anspruch 1, **dadurch gekennzeichnet, dass** sich die Hauptrippen über eine radiale Strecke von wenigstens 90 % des Ringbereichs zwischen dem Innenumfang und dem Außenumfang einer Bremsscheibe erstrecken.

3. Innenbelüftete Bremsscheiben nach einem der vorangehenden Ansprüche, **dadurch gekennzeichnet, dass** zwischen jeweils zwei Hauptrippen $F_{m-1,1}$ und $F_{m1}$ wenigstens eine Nebenrippe vorgesehen ist, wobei die Anzahl an Nebenrippen zwischen jeweils zwei Hauptrippen eine ungerade Anzahl ist.

4. Innenbelüftete Bremsscheiben nach einem vorangehenden Anspruch, **dadurch gekennzeichnet, dass** der Querschnitt des bezogen auf eine Hauptrippe in Drehrichtung liegenden Kanals größer ist als der Querschnitt des bezogen auf eine Hauptrippe entgegengesetzt zur Drehrichtung liegenden Kanals.

5. Innenbelüftete Bremsscheiben nach Anspruch 4, **dadurch gekennzeichnet, dass** das Verhältnis der Querschnittsflächen dieser zwei benachbarten Kanäle wenigstens 1,1 beträgt.

6. Innenbelüftete Bremsscheiben nach einem vorangehenden Anspruch, **dadurch gekennzeichnet, dass** der Innenbelüftete Bremsscheibenrotor eine derartige Reihe von Rippen $F_{mn}$ zwischen einer flachen Seite jeder dieser Scheiben aufweist, wobei sich die Rippen $F_{mn}$ vom Innenumfang oder von einem Punkt zwischen dem Innenumfang und dem Außenumfang zu einem anderen Punkt erstrecken, dessen Abstand von der Achse des Bremsscheibenrotors 40 % bis 100 % des Radius des Außenumfangs des Bremsscheibenrotors beträgt.

7. Innenbelüftete Bremsscheiben nach Anspruch 6, **dadurch gekennzeichnet, dass** der Index m der Rippen $F_{mn}$ für eine ganze Zahl von 1 bis i steht, wobei i einen ausgewählten Wert von i = 2 bis i = 64 aufweisen kann, und n für eine ganze Zahl von 1 bis j steht, wobei j einen ausgewählten Wert von j = 4 bis j = 10 aufweisen kann und wobei jede der Rippen $F_{mn}$ für alle m von 1 bis i und für jeden einzelnen konstanten Wert von n die gleiche Form aufweist und wobei die Abfolge in Kreisrichtung eine i-fache Wiederholung einer Gruppe von Rippen mit gleicher Anzahl j von Rippen nach folgender Regel ist:

- für ein gegebenes m ist die radiale Erstreckung $R_{m1}$ der Rippe $F_{m1}$, gemessen als die radiale Strecke vom Ende der zur Symmetrieachse nächsten Rippe $F_{m1}$ zum Ende der von der Symmetrieachse entferntesten Rippe $F_{m1}$, die längste in der Reihe von $F_{m1}$, $F_{m2}$, $F_{m3}$, ..., $F_{mj}$,
- für ein gegebenes m ist die radiale Erstreckung $R_{m,n+1}$ der Rippe $F_{m,n+1}$, gemessen als die radiale Strecke vom Ende der zur Achse nächsten Rippe $F_{m,n+1}$ zum Ende der von der Achse entferntesten Rippe $F_{m,n+1}$, kürzer als die radiale Erstreckung der Rippe $F_{m1}$, aber länger als die radiale Erstreckung der Rippe $F_{mn}$ und länger als die radiale Erstreckung der Rippe $F_{i,n+2}$, wenn n+1 eine ungerade Zahl von 3 bis j-1 ist,
- für ein gegebenes m ist die radiale Erstreckung $R_{m,n+1}$ der Rippe $F_{m,n+1}$, gemessen als die radiale Strecke vom Ende der zur Achse nächsten Rippe $F_{m,n+1}$ zum Ende der von der Achse entferntesten Rippe $F_{m,n+1}$, kürzer als die radiale Erstreckung der Rippe $F_{m1}$ und kürzer als die radiale Erstreckung der Rippe $F_{mn}$ und kürzer als die radiale Erstreckung der Rippe $F_{m,n+2}$, wenn n+1 eine gerade Zahl von 2 bis j-2 ist.

8. Innenbelüftete Bremsscheiben nach Anspruch 6, **dadurch gekennzeichnet, dass** der innenbelüftete Bremsscheibenrotor Rippen $F_{mn}$ aufweisen kann, die entlang ihrer radialen Erstreckung in zwei Teile $F'_{mn}$ und $F''_{mn}$ unterteilt sind, mit der Bedingung, dass die radiale Erstreckung von $F'_{mn}$ 10 % bis 80 % der radialen Erstreckung von $F_{mn}$ beträgt und dass die radiale Erstreckung von $F''_{mn}$ 80 % bis 10 % der radialen Erstreckung von $F_{mn}$ beträgt, wobei die Summe der radialen Erstreckungen der Rippen $F'_{mn}$ und $F''_{mn}$ maximal 90 % der radialen Erstreckung von $F_{mn}$ beträgt.

9. Innenbelüftete Bremsscheiben nach Anspruch 6, **dadurch gekennzeichnet, dass** der innenbelüftete Bremsscheibenrotor eine Mehrzahl von Rippen aufweist, wobei die Abstände in einer Reihe von Rippen derart abwechseln, dass der Abstand zwischen einem Paar willkürlich ausgewählter benachbarter Rippen (b) und (c) stets entweder kleiner als der Abstand zwischen der Rippe (b) und ihrer Vorgängerin (a) sowie der Abstand zwischen der Rippe (c) und ihrer Nachfolgerin (d) oder größer als der Abstand zwischen der Rippe (b) und ihrer Vorgängerin (a) sowie der Abstand zwischen der Rippe (c) und ihrer Nachfolgerin (d) ist, wobei die Abstände als der Weg zwischen zwei benachbarten Rippen definiert sind, der die zwei benachbarten Rippen entlang der Oberfläche eines Zylindermantels verbindet, der die dem Außenumfang nächsten Enden der Rippen in einer zur Drehachse des Bremsscheibenrotors senkrechten Ebene, welche die Rippen in halber Höhe schneidet, berührt, wobei Vorgängerin die bezogen auf die Drehrichtung einer Rippe unmittelbar vorangehende Rippe bezeichnet und Nachfolgerin die bezogen auf die Drehrichtung einer Rippe unmittelbar nachfolgende Rippe bezeichnet.

10. Innenbelüftete Bremsscheiben nach Anspruch 6, wobei der Abstand zwischen einer Hauptrippe $F_{m1}$ und der Rippe, die sich in der zur Drehrichtung entgegengesetzten Richtung unmittelbar neben ihr befindet, der größte der Gruppe von Abständen zwischen Rippen in einer Reihe der Rippe $F_{m1}$ und aller weiteren Rippen mit dem gleichen Wert m ist.

11. Innenbelüftete Bremsscheiben nach einem vorangehenden Anspruch, **dadurch gekennzeichnet, dass** das Verhältnis zwischen dem Winkel $\alpha$ und einem Winkel $\beta$ zwischen dem Radius $R_{WP}$ durch den Wendepunkt und der Tangente zur Außenkontur der Hauptrippe durch den Wendepunkt kleiner ist als 2,1.

12. Innenbelüftete Bremsscheiben nach einem vorangehenden Anspruch, **dadurch gekennzeichnet, dass** die Länge wenigstens eines Radius zwischen $R(C_{l1})$ und $R(C'_{i1}) = R(C_{l1}) \times 1{,}1$ im Bereich von 14 % bis 60 % des Radius $R(C_{l1})$ liegt.

## Revendications

1. Disques de frein à ventilation interne ayant la forme d'une plaque cylindrique de géométrie annulaire et ayant un axe de symétrie circulaire pour sa circonférence externe et sa circonférence interne et un plan de symétrie perpendiculaire à son axe de rotation, avec un trou central qui est symétrique par rapport audit axe, comprenant au moins deux disques annulaires parallèles qui sont reliés l'un à l'autre par une série répétée de nervures présentant une série d'au moins deux nervures majeures $F_{m1}$ où m est un nombre naturel d'au moins 2, une nervure majeure étant définie comme une nervure qui s'étend sur une distance radiale d'au moins 85 % de la zone annulaire entre la circonférence interne et la circonférence externe d'un disque de frein, les au moins deux disques annulaires parallèles et les nervures formant ensemble le rotor de disque de frein, **caractérisés en ce que** les conditions suivantes sont remplies :

    (a) entre chaque paire de ces nervures majeures, il existe au moins trois nervures supplémentaires appelées nervures mineures ou nervures secondaires $F_{mn}$, où n est un nombre entier de 2 à 10, c'est-à-dire une nervure qui n'est pas une nervure majeure auquel cas n = 1, au moins une nervure mineure plus longue que les deux nervures voisines et au moins une nervure mineure plus courte que les deux nervures voisines existant entre chaque paire de nervures majeures consécutives,

    (b) des conduits sont confinés entre les nervures, lesquels conduits ont des orifices vers la circonférence externe des disques de frein, **caractérisés en ce que** les orifices des conduits sont répartis sur la circonférence externe des disques de frein de sorte que l'aire en coupe transversale d'au moins un conduit soit toujours plus grande que chacune des coupes transversales des deux conduits voisins, et de sorte que la coupe transversale d'au moins un autre conduit soit toujours plus petite que chacune des coupes transversales des deux conduits voisins, où la coupe transversale d'un conduit est déterminée comme l'aire dans l'enveloppe de cylindre coupée par ledit conduit, l'axe de laquelle enveloppe de cylindre est identique à l'axe de rotation du disque de frein, et laquelle enveloppe de cylindre a le même rayon que l'extrémité externe dudit conduit,

    (c) la partie interne des nervures majeures $F_{m1}$ proches de l'axe de rotation a la forme d'un gourdin où l'épaisseur d'une nervure majeure $F_{m1}$ a au moins un minimum qui est dans la moitié interne de son extension radiale, l'épaisseur étant définie comme le chemin le plus court entre un point sur le contour d'une nervure et n'importe quel point sur la partie opposée de la nervure, le contour étant formé par un plan croisant les nervures en leur hauteur milieu, étant l'extension parallèle à l'axe de l'anneau de disque de frein, lequel plan est parallèle aux surfaces de frottement de l'anneau de disque de frein, ou vertical à l'axe de l'anneau de disque de frein,

    (d) la partie de la silhouette d'une nervure majeure $F_{m1}$ qui se trouve au sein d'une zone délimitée par la circonférence interne $C_{i1}$ avec le rayon $R(C_{i1})$, et une seconde circonférence $C'_1$ ayant le rayon $R(C'_{i1}) = R(C_{l1})$ $\times$ 1,1, a au moins deux rayons différents, la langueur d'au moins l'un de ces rayons étant d'au moins 12 % du

rayon $R(C_{l1})$,

(e) le contour externe d'au moins une nervure $F_{mn}$ a un point de renversement WP qui se trouve dans le sens vers la circonférence externe de ladite nervure $F_{mn}$ à partir de la section interne de cette nervure $F_{mn}$ sur le flanc de la nervure voisine opposée au sens de rotation, et le rayon $R_vWP$ de courbure sur ce flanc avant ce point de renversement, c'est-à-dire dans le sens de l'axe de rotation, est plus grand que le rayon $R_nWP$ de courbure après le point de renversement, c'est-à-dire dans le sens de la circonférence externe, et

(f) le contour externe d'au moins une nervure $F_{mn}$ a un point de renversement WP qui se trouve dans le sens vers la circonférence externe de ladite nervure $F_{mn}$ à partir de la section interne de cette dite nervure $F_{mn}$ sur le flanc de cette dite nervure $F_{mn}$ opposée au sens de rotation, et la position de ce point de renversement WP est définie par un angle $\alpha$ entre le rayon RWP à travers le point de renversement WP sur le flanc de cette dite nervure $F_{mn}$ opposée au sens de rotation de l'anneau de disque de frein, et une ligne droite reliant ce point de renversement WP avec le point central PC d'un cercle circonscrit au sein de l'extrémité interne de la nervure immédiatement voisine de ladite nervure $F_{mn}$ opposée au sens de rotation, et cet angle $\alpha$ est inférieur à 90°.

**2.** Disques de frein à ventilation interne selon la revendication 1, **caractérisés en ce que** les nervures majeures s'étendent sur une distance radiale d'au moins 90 % de la zone annulaire entre la circonférence interne et la circonférence externe d'un disque de frein.

**3.** Disques de frein à ventilation interne selon l'une quelconque des revendications précédentes, **caractérisés en ce qu'**il existe au moins une nervure mineure entre deux nervures majeures quelconques $F_{m\cdot1,1}$ et $F_{m1}$, le nombre de nervures mineures entre deux nervures majeures étant un nombre impair.

**4.** Disques de frein à ventilation interne selon l'une quelconque des revendications précédentes, **caractérisés en ce que** la coupe transversale du conduit qui se trouve dans le sens de rotation par rapport à une nervure majeure, est plus grande que la coupe transversale du conduit qui se trouve contre le sens de rotation par rapport à une nervure majeure.

**5.** Disques de frein à ventilation interne selon la revendication 4, **caractérisés en ce que** le rapport entre les aires en coupe transversale de ces deux conduits voisins est d'au moins 1,1.

**6.** Disques de frein à ventilation interne selon l'une quelconque des revendications précédentes, **caractérisés en ce que** le rotor de disque de frein à ventilation interne a une telle série de nervures $F_{mn}$ entre un côté plat de chacun de ces disques, lesquelles nervures $F_{mn}$ s'étendent depuis la circonférence interne ou depuis n'importe quel point entre la circonférence interne et la circonférence externe jusqu'à un autre point dont la distance depuis l'axe du rotor de disque de frein est de 40 % à 100 % du rayon de la circonférence externe du rotor de disque de frein.

**7.** Disques de frein à ventilation interne selon la revendication 6, **caractérisés en ce que** l'indice m dans les nervures $F_{mn}$ indique un nombre entier de 1 à i, où i peut avoir une valeur choisie de i = 2 à i = 64, et n indique un nombre entier de 1 à j, où j peut avoir une valeur choisie de j = 4 à j = 10, et où chacune des nervures $F_{mn}$ pour tous les m de 1 à i et pour chaque valeur constante individuelle de n ont la même forme, et où la séquence en sens circulaire est une répétition i fois d'un ensemble de nervures avec un nombre égal de nervures qui obéissent à la règle suivante:

- pour un m donné, l'extension radiale $R_{m1}$ de la nervure $F_{m1}$, mesurée comme la distance radiale depuis l'extrémité de la nervure $F_{m1}$ la plus proche de l'axe de symétrie jusqu'à l'extrémité de la nervure $F_{m1}$ qui est la plus éloignée de l'axe de symétrie, est la plus longue dans la série de $F_{m1}$, $F_{m2}$, $F_{m3}$, ..., $F_{mj}$,
- pour un m donné, l'extension radiale $R_{m,n+1}$ de la nervure $F_{m,n+1}$, mesurée comme la distance radiale depuis l'extrémité de la nervure $F_{m,n+1}$ la plus proche de l'axe jusqu'à l'extrémité de la nervure $F_{m,n+1}$ qui est la plus éloignée de l'axe, est plus courte que l'extension radiale de la nervure $F_{m1}$, mais plus longue que l'extension radiale de la nervure $F_{mn}$ et plus longue que l'extension radiale de la nervure $F_{i,n+2}$ si n+1 est un nombre impair de 3 à j-1,
- pour un m donné, l'extension radiale $R_{m,n+1}$ de la nervure $F_{m,n+1}$, mesurée en tant que la distance radiale depuis l'extrémité de la nervure $F_{m,n+1}$ la plus proche de l'axe jusqu'à l'extrémité de la nervure $F_{m,n+1}$ qui est la plus éloignée de l'axe, est plus courte que l'extension radiale de la nervure $F_{m1}$, et plus courte que l'extension radiale de la nervure $F_{mn}$ et plus courte que l'extension radiale de la nervure $F_{m,n+2}$ si n+1 est un nombre pair de 2 à j-2.

**8.** Disques de frein à ventilation interne selon la revendication 6, **caractérisés en ce que** le rotor de disque de frein à ventilation interne peut avoir des nervures $F_{mn}$ qui sont divisées en deux parties $F'_{mn}$ et $F''_{mn}$ le long de leur extension radiale, à condition que l'extension radiale de $F'_{mn}$ soit de 10 % à 80 % de l'extension radiale de $F_{mn}$, et que l'extension radiale de $F''_{mn}$ soit de 80 % à 10 % de l'extension radiale de $F_{mn}$, la somme des extensions radiales des nervures $F'_{mn}$ et $F''_{mn}$ ne dépassant pas 90 % de l'extension radiale de $F_{mn}$.

9.  Disques de frein à ventilation interne selon la revendication 6, **caractérisés en ce que** le rotor de disque de frein à ventilation interne comporte une pluralité de nervures où les distances dans une série de nervures alternent de façon à ce que la distance entre une paire de nervures voisines (b) et (c) choisies arbitrairement soit toujours soit plus petite à la fois que la distance entre la nervure (b) et son prédécesseur (a) et la distance entre la nervure (c) et son successeur (d), soit plus grande à la fois que la distance entre la nervure (b) et son prédécesseur (a) et la distance entre la nervure (c) et son successeur (d), lesquelles distances sont définies comme le chemin entre deux nervures adjacentes reliant lesdites deux nervures adjacentes le long de la surface d'une enveloppe de cylindre touchant les extrémités desdites nervures les plus proches de la circonférence externe dans un plan perpendiculaire à l'axe de rotation du rotor de disque de frein qui coupe lesdites nervure à mi-hauteur, prédécesseur signifiant la nervure précédant immédiatement une nervure par rapport au sens de rotation, et successeur signifiant la nervure suivante immédiatement une nervure par rapport au sens de rotation.

10. Disques de frein à ventilation interne selon la revendication 6, où la distance entre une nervure majeure $F_{m1}$ et la nervure immédiatement à côté d'elle dans le sens opposé au sens de rotation est la plus grande dans l'ensemble de distances entre des nervures dans une série de nervures $F_{m1}$ et toutes les autres nervures ayant la même valeur de m.

11. Disques de frein à ventilation interne selon l'une quelconque des revendications précédentes, **caractérisés en ce que** le rapport entre l'angle $\alpha$ et un angle $\beta$ entre le rayon $R_{WP}$ à travers le point de renversement et la tangente au contour externe de la nervure majeure à travers le point de renversement WP est inférieur à 2,1.

12. Disques de frein à ventilation interne selon l'une quelconque des revendications précédentes, **caractérisés en ce que** la longueur d'au moins un rayon entre $R(C_{l1})$ et
$R(C'_{i1}) = R(C_{i1}) \times 1,1$ se trouve dans l'intervalle de 14 % à 60 % du rayon $R(C_{i1})$.

Fig. 1

Fig. 2

Fig. 3

Fig. 4

Fig. 5

EP 2 378 153 B1

Fig. 6a

Fig. 6b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2257176 A1
- US 7100748 B2
- US 7100748 B